# EUROPEAN PATENT APPLICATION

(11) **EP 4 741 458 A1**
(43) Date of publication of application: **13.05.2026**
(21) Application number: 24929886.0
(22) Date of filing: 10.12.2024
(51) Int. Cl.: C08L 67/04, C08L 67/02, C08K 5/134, C08L 33/06, C08J 5/18

(54) **GAS BARRIER POLYMER RESIN COMPOSITION AND FILM CONTAINING SAME**

(30) Priority: 15.03.2024 KR 20240036148
(71) Applicant: LG Chem, Ltd., Seoul 07336 (KR)
(72) Inventor: JEONG, Moon Gon, Daejeon 34122 (KR); UM, Jun Geun, Daejeon 34122 (KR); HEO, Seongbeom, Daejeon 34122 (KR); PARK, Jaeyong, Daejeon 34122 (KR); LEE, Chunhwa, Daejeon 34122 (KR)
(74) Representative: Goddar, Heinz J.
(86) International application number: PCT/KR2024/020120
(87) International publication number: WO 2025/192827

(57) **Abstract**

A film manufactured using a polymer resin composition according to the present invention not only has biodegradability, but also has excellent oxygen and water vapor barrier properties and excellent ductility, thereby being used as a food packaging material.

## Description

### [Technical Field]

### Cross-reference to Related Application

The present application is based on, and claims priority from, Korean Patent Application No. 10-2024-0036148, filed on March 15, 2024, the disclosure of which is hereby incorporated by reference herein in its entirety.

The present invention relates to a gas barrier polymer resin composition having excellent oxygen and water vapor barrier properties and biodegradable properties, and a film including the same.

### [Background Art]

The recent frequent occurrence of natural disasters has made us realize that the environmental pollution and the resulting climate change are serious issues that need to be addressed as a priority. Among them, reducing the use of disposable plastics is an environmental pollution improvement activity that can be practiced in everyday life, and many countries are taking as a matter of policy. As part of this policy, the use of eco-friendly or biodegradable plastics is also recommended, and various plastics which are biodegradable in soil or the ocean are being researched and developed.

In the field of food packaging, where plastics account for the majority, it is essential to use materials that are able to block gases such as oxygen and water vapor as food packaging materials in order to prevent deterioration during the distribution process and for long-term preservation, and most of these gas barrier materials are based on petrochemical raw materials, and in many cases, they are non-biodegradable. Accordingly, research and development of food packaging materials based on biodegradable materials that are naturally degradable in soil or the ocean are actively being conducted.

Food packaging materials need to minimize the inflow of oxygen and water vapor from the outside in order to prevent oxidation and spoilage of the food thereinside, but it is difficult to make the entire food packaging material biodegradable due to the use of general-purpose biodegradable materials (EVOH, MXD6, etc.) or the additional use of metal layers (Al, aluminum oxide, etc.).

Meanwhile, polyglycolic acid (PGA), which is one of the biodegradable polymer materials, has excellent oxygen and water vapor barrier properties, but it has a problem of poor ductility, and therefore, it is difficult to process and to use PGA as a film or sheet for food packaging materials.

Accordingly, the present invention relates to a film capable of blocking oxygen and water vapor, in which polybutylene succinate (PBS) is used together with PGA, and it was found that such a film enables the realization of biodegradable food packaging materials, thereby completing the present invention.

### [Disclosure]

### [Technical Problem]

There is provided a gas barrier polymer resin composition having excellent oxygen and water vapor barrier properties and biodegradable properties.

There is also provided a film including the polymer resin composition.

### [Technical Solution]

To solve the above problem, there is provided a polymer resin composition as follows:
the polymer resin composition including
polyglycolic acid (PGA) and polybutylene succinate (PBS),
wherein a weight ratio of the PGA and PBS is 40:60 to 85:15, and
an oxygen transmission rate of a film manufactured using the polymer resin composition is 50 cc/m²·day or less, based on a film thickness of 35 um.

As used herein, the term "PGA" is a biodegradable polymer, and functions to provide oxygen- and water vapor-blocking properties for the polymer resin composition according to the present invention. In addition, as used herein, the term "PBS" functions to provide ductility for the polymer resin composition according to the present invention. In other words, the polymer resin composition according to the present invention may have sufficient ductility along with oxygen- and water vapor-blocking properties by using the PGA and PBS in combination, thereby being used as a food packaging material.

Preferably, a weight average molecular weight (Mw) of the PGA is 100,000 to 250,000. When the weight average molecular weight of the PGA is lower than 100,000, extrusion molding may be difficult due to low melt viscosity, and there may be a problem that mechanical properties of a product, such as a molded film, are poor. In addition, when the weight average molecular weight is higher than 250,000, discoloration of the PGA may occur significantly, which may cause a problem in the appearance of a molded product, such as a film, and more energy may be required for melt processing, which makes efficient processing difficult. More preferably, the weight average molecular weight (Mw) of the PGA is 100,000 to 200,000.

Further, a melt index of the PGA (measured at 230°C under a load of 2.16 kg according to ASTM D1238) is 4 g/10 min to 25 g/10 min. Preferably, the melt index of the PGA is 5 g/10 min to 20 g/10 min.

Preferably, a weight average molecular weight (Mw) of the PBS is 100,000 to 250,000. When the weight average molecular weight of the PBS is lower than 100,000, there is a concern that a melt strength is poor, resulting in insufficient processing stability and insufficient miscibility with PGA. In addition, when the weight average molecular weight of the PBS is higher than 250,000, there is a concern that flowability is low and more energy is required for processing, resulting in lower efficiency. More preferably, the weight average molecular weight (Mw) of the PBS is 100,000 to 200,000.

Further, a melt index of the PBS (measured at 190°C under a load of 2.16 kg according to ASTM D1238) is 1 g/10 min to 10 g/10 min. Preferably, the melt index of the PBS is 3 g/10 min to 7 g/10 min.

A weight ratio of the PGA and PBS is 40:60 to 85:15. When the weight ratio is less than 40:60, there is a problem that the oxygen- and water vapor-blocking properties are poor because of the excessively low content of PGA. In addition, when the weight ratio is more than 80:20, there is a problem that the ductility is poor because of the excessively low content of PBS. Preferably, the weight ratio of the PGA and PBS is 45:55 or more, 50:50 or more, or 55:45 or more; and 80:20 or less, 75:20 or less, 70:30 or less, 65:35 or less, or 60:40 or less.

In addition, the polymer resin composition according to the present invention includes 0.01% by weight to 3% by weight of an antioxidant with respect to the total weight of the PGA and PBS, and 0.01% by weight to 3% by weight of a chain extender with respect to the total weight of the PGA and PBS.

The antioxidant suppresses a branching phenomenon that may occur during the processing of the PBS, and suppresses thermal decomposition that may occur during the processing of the PGA. In addition, the chain extender is added to the polymer resin composition according to the present invention to control the melt index in a desired processing range.

The antioxidant and chain extender are not particularly limited, and materials commonly used in the field to which the present invention belongs may be used. For example, as the antioxidant, Irganox 1010 available from BASF may be mentioned, and as the chain extender, Joncryl ADR 4468 available from BASF may be mentioned.

In addition, the melt index (measured at 230°C under a load of 2.16 kg according to ASTM D1238) of the polymer resin composition according to the present invention is 4 g/10 min to 25 g/10 min. When the melt index of the polymer resin composition is less than 4 g/10 min, there is a concern that surface defects may occur when manufactured into a film or decomposition may occur during film processing, and when the melt index of the polymer resin composition is more than 25 g/10 min, there is a concern that the melt strength is low, thereby reducing productivity when manufacturing a film. Preferably, the melt index (measured at 230°C under a load of 2.16 kg according to ASTM D1238) of the polymer resin composition according to the present invention is 5 g/10 min or more, 6 g/10 min or more, 7 g/10 min or more, 8 g/10 min or more, 9 g/10 min or more, 10 g/10 min or more, 11 g/10 min or more, 12 g/10 min or more, 13 g/10 min or more, 14 g/10 min or more, 14.5 g/10 min or more, or 15.0 g/10 min or more; and 24 g/10 min or less, 23 g/10 min or less, 22 g/10 min or less, 21 g/10 min or less, 20 g/10 min or less, 19 g/10 min or less, 18 g/10 min or less, 17 g/10 min or less, 16 g/10 min or less, 15 g/10 min or less, 14 g/10 min or less, 13 g/10 min or less, 12 g/10 min or less, 11 g/10 min or less, or 10 g/10 min or less.

Further, there is provided a film including the polymer resin composition.

A method of manufacturing a film according to the present invention may be manufactured by, for example, extruding the polymer resin composition according to the present invention described above. Preferably, a thickness of the film according to the present invention is 1 um to 1000 um, more preferably 10 um to 100 um.

An oxygen transmission rate of the film according to the present invention is 50 cc/m²·day or less. More preferably, the oxygen transmission rate of the film according to the present invention is 40 cc/m²·day or less, 35 cc/m²·day or less, 30 cc/m²·day or less, 25 cc/m²·day or less, 20 cc/m²·day or less, 15 cc/m²·day or less, 10 cc/m²·day or less, 5 cc/m²·day or less, 4 cc/m²·day or less, or 3 cc/m²·day or less. The measurement of the oxygen transmission rate is based on the film thickness of 35 um, and a detailed method thereof may be specified in Examples below.

In addition, a water vapor transmission rate of the film according to the present invention is 50 g/m²·day or less. More preferably, the water vapor transmission rate of the film according to the present invention is 40 g/m²·day or less, 35 g/m²·day or less, 30 g/m²·day or less, 25 g/m²·day or less, 20 g/m²·day or less, 15 g/m²·day or less, 10 g/m²·day or less, 5 g/m²·day or less, 4 g/m²·day or less, or 3 g/m²·day or less. The measurement of the water vapor transmission rate is based on the film thickness of 35 um, and a detailed method thereof may be specified in Examples below.

In addition, an elongation of the film according to the present invention is 350% or more. When the elongation is less than 350%, there is a problem that the ductility is lowered and its use as a food packaging material is difficult. Preferably, the elongation of the film according to the present invention is 360% or more, 370% or more, 380% or more, 390 % or more, 400% or more, 405% or more, or 410% or more, and 500% or less, 490% or less, 480% or less, 470% or less, 460% or less, 450% or less, 440% or less, or 430% or less. A method of measuring the elongation may be specified in Examples below.

In addition, a tensile strength of the film according to the present invention is 45 MPa to 60 MPa. In addition, a yield strength of the film according to the present invention is 30 MPa to 60 MPa. A method of measuring the tensile strength and yield strength may be specified in Examples below.

### [Effect of the Invention]

A film manufactured using a polymer resin composition according to the present invention described above not only has biodegradability, but also has excellent oxygen and water vapor barrier properties and excellent ductility, thereby being used as a food packaging material.

### [Best Mode for Carrying Out the Invention]

Hereinbelow, embodiments of the present invention will be described in more detail in the following Examples. However, the following Examples are only for illustrating the embodiments of the present invention, and the contents of the present invention are not limited by the following Examples.

### Example and Comparative Example

### 1) Preparation of composition

The materials used in Examples and Comparative Examples below are as follows.
- PGA: PJ Chem Vytal-J116 (MI = 15 g/10 min @230°C, 2.16 kg)
- PBS: PTT-MCC FZ91PB (MI = 5 g/10 min @190°C, 2.16 kg)
- Antioxidant: BASF Irganox 1010
- Chain extender: BASF Joncryl ADR 4468

The above materials were dried in a convention oven at 80°C for 12 hours. The dried materials were weighed and mixed as described in Table 1 below. Subsequently, the mixture was processed in a twin screw extruder under the following conditions to prepare each composition.
- Extruder specifications: Screw Diameter - 32 pi, L/D = 40
- Processing conditions: Screw temperature = 220°C, Screw speed = 200 rpm
- Throughput: 20 kg/hr

Each of the compositions prepared above was dried in a convention oven at 80°C for 12 hours to control the water vapor content at 500 ppm or less.

### 2) Manufacture of film

Each of the compositions prepared above was processed in a film casting machine under the conditions below. At this time, the film finally manufactured was manufactured to have a thickness of 35 um.
- Extruder specifications: Screw Diameter - 17.5 pi, T-die width = 120 mm
- Processing conditions: Barrel temperature = 230°C, Screw speed = 50 rpm, Casting roll temperature = 30°C, Casting roll speed = 3 m/min

**[Table 1]**

| Composition | PGA | PBS | Irganox 1010 | Joncryl ADR 4468 |
|---|---|---|---|---|
| Unit | Wt% | Wt% | phr | phr |
| Example 1 | 50 | 50 | 0.2 | 0.2 |
| Example 2 | 60 | 40 | 0.2 | 0.2 |
| Example 3 | 70 | 30 | 0.2 | 0.2 |
| Example 4 | 75 | 25 | 0.2 | 0.2 |
| Comparative Example 1 | 30 | 70 | 0.2 | 0.2 |
| Comparative Example 2 | 40 | 60 | 0.2 | 0.2 |
| Comparative Example 3 | 80 | 20 | 0.2 | 0.2 |

### Experimental Example 1

For each of the compositions prepared above, MI properties were measured by the following methods.
- Toyoseiki Melt Indexer, G-02 equipment was used.
- ASTM D1238, 230°C, 2.16 kg conditions.

### Experimental Example 2

For each of the films manufactured above, physical properties were measured by the following methods.

### 1) Mechanical properties - Tensile strength, yield strength, elongation

- ZwickRoell tensile tester was used.
- ASTM D882 measurement standard and specimen were used, and a measurement speed was 500 mm/min.

### 2) Oxygen transmission rate (OTR)

- Systech Illinois 8001 oxygen transmission rate analyzer was used.
- 5 cm²-sized circular film was used.
- Measurement was performed at an oxygen (>99.9%) supply pressure of 1.5 bar, a relative humidity of 0%, a measurement temperature of 23°C, and 15-minute intervals for 48 hours.

### 3) Water vapor transmission rate (WVTR)

- Systech Illinois AquaSense 7101 water vapor transmission rate tester was used.
- 5 cm²-sized circular film was used.
- Measurement was performed at a nitrogen (carrier gas) supply pressure of 2 bar, a relative humidity of 90%, a measurement temperature of 23°C, and 10-minute intervals for 48 hours.

The measurement results are shown in Table 2 below.

**[Table 2]**

| | Physical properties of composition | Physical properties of film | | | | | | |
|---|---|---|---|---|---|---|---|---|
| Physical properties | MI | Thickness | Tensile strength | Yield strength | Elongati on | OTR | WVTR | OTR/WVTR |
| Unit | g/10min | um | MPa | MPa | % | cc/m²·day | g/m²·day | cc/g |
| Example 1 | 9.1 | 35 | 48.4 | 40.4 | 421 | 2.9 | 1.7 | 1.7 |
| Example 2 | 8.7 | 35 | 46.3 | 46.3 | 418 | 2.1 | 3.0 | 0.7 |
| Example 3 | 6.4 | 35 | 50.9 | 50.9 | 432 | 1.5 | 0.9 | 1.7 |
| Example 4 | 9.5 | 35 | 55.1 | 55.1 | 355 | 1.6 | 1.2 | 1.3 |
| Comparative Example 1 | 6.2 | 35 | 47.9 | 33.5 | 425 | 154 | 31 | 5.0 |
| Comparative Example 2 | 7.3 | 35 | 49.7 | 33.2 | 428 | 56 | 27 | 2.1 |
| Comparative Example 3 | 10.2 | 35 | 55.9 | 55.9 | 58 | 2.3 | 1.2 | 1.9 |

As shown in Table 2, the films of Comparative Examples 1 and 2 had poor oxygen barrier properties, and therefore, they were not suitable for use as food packaging materials. In addition, the film of Comparative Example 3 had low elongation, and therefore, it was not suitable for use as a food packaging material. In contrast, it was confirmed that the films of Examples 1 to 4 according to the present invention had excellent oxygen barrier properties and water vapor barrier properties and also excellent elongation, and therefore, they may be used as food packaging materials.

## Claims

1. A polymer resin composition comprising
polyglycolic acid (PGA) and polybutylene succinate (PBS),
wherein a weight ratio of the PGA and PBS is 40:60 to 85:15, and
an oxygen transmission rate of a film manufactured using the polymer resin composition is 50 cc/m²·day or less, based on a film thickness of 35 um.

2. The polymer resin composition of claim 1, comprising 0.01% by weight to 3% by weight of an antioxidant with respect to the total weight of the PGA and PBS, and 0.01% by weight to 3% by weight of a chain extender with respect to the total weight of the PGA and PBS.

3. The polymer resin composition of claim 1, wherein a weight average molecular weight (Mw) of the PGA is 100,000 to 250,000.

4. The polymer resin composition of claim 1, wherein a melt index of the PGA (measured at 230°C under a load of 2.16 kg according to ASTM D1238) is 4 g/10 min to 25 g/10 min.

5. The polymer resin composition of claim 1, wherein a weight average molecular weight (Mw) of the PBS is 100,000 to 250,000.

6. The polymer resin composition of claim 1, wherein a melt index of the PBS (measured at 190°C under a load of 2.16 kg according to ASTM D1238) is 1 g/10 min to 10 g/10 min.

7. The polymer resin composition of claim 1, wherein a weight ratio of the PGA and PBS is 40:60 to 80:20.

8. The polymer resin composition of claim 1, wherein a melt index of the polymer resin composition (measured at 230°C under a load of 2.16 kg according to ASTM D1238) is 4 g/10 min to 25 g/10 min.

9. A film comprising the polymer resin composition of any one of claims 1 to 8.

10. The film of claim 9, wherein a thickness of the film is 1 um to 1000 um.

11. The film of claim 9, wherein an oxygen transmission rate of the film is 5 cc/m²·day or less, based on a film thickness of 35 um.

12. The film of claim 9, wherein a water vapor transmission rate of the film is 50 g/m²·day or less, based on a film thickness of 35 um.

13. The film of claim 9, wherein an elongation of the film is 350% or more.

14. The film of claim 9, wherein an elongation of the film is 400% or more.

15. The film of claim 9, wherein a tensile strength of the film is 45 MPa to 60 MPa.

16. The film of claim 9, wherein a yield strength of the film is 30 MPa to 60 MPa.
